# EUROPEAN PATENT APPLICATION

(11) **EP 1 078 561 A2**
(43) Date of publication of application: **28.02.2001**
(21) Application number: 00420179.4
(22) Date of filing: 21.08.2000
(51) Int. Cl.: A01B 35/22, B21D 53/66

(54) **Earth working sweep**

(30) Priority: 23.08.1999 US 378951; 03.03.2000 US 519020
(71) Applicant: Bruce, Douglas G., Perry (County of Dallas), Iowa (US)
(72) Inventor: Bruce, Douglas G., Perry (County of Dallas), Iowa (US)
(74) Representative: Moinas, Michel

(57) **Abstract**

The present invention has several aspects to it, one of which is the provision of a chisel point which is straight and tapered from its thinnest part at the extreme front to a thicker part at the rear thereof for causing a sweep to wear longer than prior art sweeps. This sweep also improves soil penetration and is self-sharpening. Another aspect of the present invention is to provide an earth working sweep having a front end, a right side, a left side, and a central upper portion for connecting the sweep to an implement. It also has a right rear wing portion and a left rear wing portion with an intermediate portion connecting the front end to the central upper rear portion and the left and right rear wing portions. A right edge and a left edge have concave edges on the front and convex edges on the back so as to form a somewhat S-shaped configuration which reduces scrap when being made and adds to the longevity and performance of the sweep. Another aspect of the present invention is a method of making a ground engaging sweep from a sheet of metal which has two parallel sides, a first end and a second end. The edges of the sweep are cut so that the right side of one sweep is a mirror image of the left side of the next adjacent sweep so that no material is wasted therebetween as they are cut from one sheet of material. By using this method, as much metal as possible is utilized in the sweep itself rather than having wasted metal as scrap and thereby enhancing the life and performance of such sweep.

## Description

### BACKGROUND OF INVENTION

### Field of the Invention

The present invention relates generally to an earth working sweep and more particularly to one primarily used for agricultural purposes and also to a method of making sweeps.

### Description of Prior Art

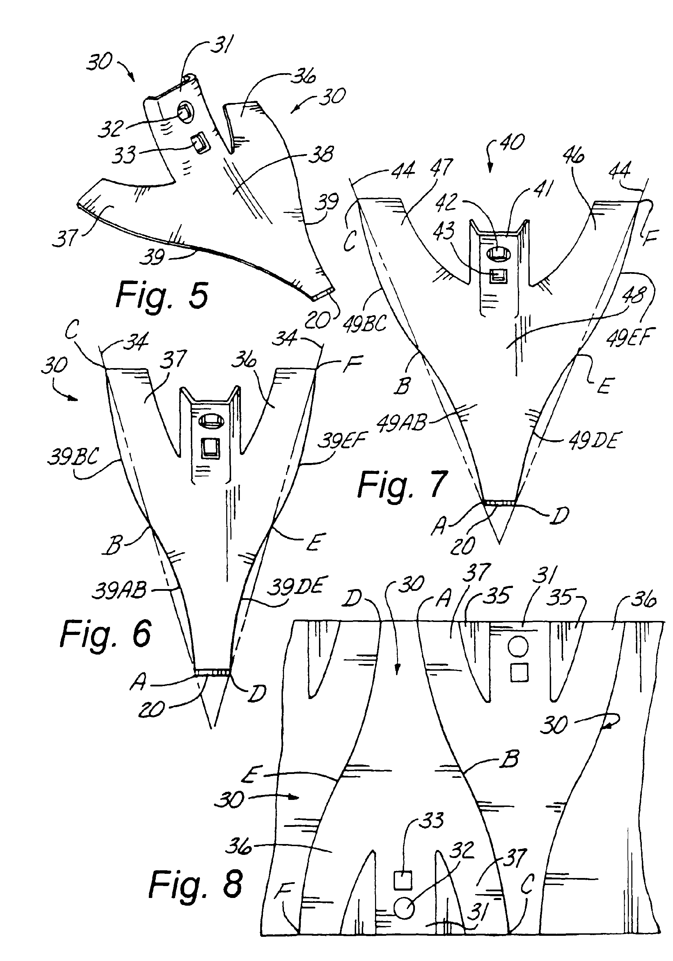

Prior art sweeps are mostly of the shape shown in FIG. 4. A problem with prior art sweeps is that they wear out too quickly. Another problem with the prior art is that in the process of constructing prior art sweeps, too much metal is scrap and therefore there is a problem of too much wasted material.

### BRIEF SUMMARY OF THE INVENTION

The present invention has several aspects to it, one of which is the provision of a chisel point which is straight and tapered from its thinnest part at the extreme front to a thicker part at the rear thereof for causing a sweep to wear longer than prior art sweeps. This sweep also improves soil penetration and is self-sharpening. Another aspect of the present invention is to provide an earth working sweep having a front end, a right side, a left side, and a central upper portion for connecting the sweep to an implement. It also has a right rear wing portion and a left rear wing portion with an intermediate portion connecting the front end to the central upper rear portion and the left and right rear wing portions. A right edge and a left edge have concave edges on the front and convex edges on the back so as to form a somewhat S-shaped configuration which reduces scrap when being made and adds to the longevity and performance of the sweep.

Another aspect of the present invention is a method of making a ground engaging sweep from a sheet of metal which has two straight sides, a first end and a second end. The edges of the sweep are cut so that the right side of one sweep is a mirror image of the left side of the next adjacent sweep so that no material is wasted therebetween as they are cut from one sheet of material. By using this method, as much metal as possible is utilized in the sweep itself rather than having wasted metal as scrap. This also enhances the life and performance of such sweep.

An object of the present invention is to provide an improved sweep and an improved method of making sweeps.

Another object of the present invention is to provide a longer wearing sweep and, because it lasts longer, it is more economical to use.

Another object of the present invention is to reduce the waste associated with making sweeps, thereby giving as much of the metal from which the sweeps are made to the farmer and thereby reducing the amount of scrap.

A further object is to provide a chisel point on a sweep.

Other objects, advantages, and novel features of the present invention will become apparent from the following detailed description of the invention when considered in conjunction with the accompanying drawings.

### BRIEF DESCRIPTION OF THE SEVERAL VIEWS OF THE DRAWINGS

FIG. 1 is a perspective view of a preferred embodiment of the present invention showing a chisel point;
FIG. 2 is another perspective view from a different angle showing the sweep of the present invention attached to a shank of an earth working implement and showing how it moves to till the soil, the soil being shown by lines and dots in FIG. 2;
FIG. 3 is a perspective view like FIG. 1 and showing the wear pattern of the sweep of FIG. 1 with the dashed lines showing the sweep as it is initially used and the solid lines after it has been used and not quite to the point where it is worn out;
FIG. 4 is a perspective view of a typical prior art sweep noting that the shape to which it is formed initially is close to the shape that the FIG. 1 sweep is as shown in solid lines in FIG. 3, after it has become worn;
FIG. 5 is a perspective view of another preferred embodiment of the present invention showing a sweep with S-curved edges;
FIG. 6 is a top view of the FIG. 5 embodiment and showing how the front edge is concave and the rear edge is convex on each side and having a chisel point;
FIG. 7 is another embodiment of the present invention but being wider at the rear than the FIG. 5 and 6 embodiment;
FIG. 8 is a top view of a sheet metal having the outline of the sweep of FIGS. 5 and 6 drawn thereon to show how much of the metal is utilized and how much is converted into scrap material;
FIG. 9 is still another embodiment of the present invention shown in a perspective view;
FIG. 10 is a top view of the embodiment of FIG. 9;
FIG. 11 is a rear view of the embodiment of FIG. 9;
FIG. 12 is a top view of the embodiment of FIG. 9 when it is flat, before it is bent to the shape of FIGS. 9-11 and also showing how it can have winged members which are wider or narrower, depending upon the desire of the user thereof; and
FIG. 13 is a view of a flat sheet of metal having the outline of the sweep of FIG. 9 thereon before it is cut out, also showing how much of the sheet of metal is utilized for the sweep and how much will end up to be scrap.

### DETAILED DESCRIPTION OF THE INVENTION

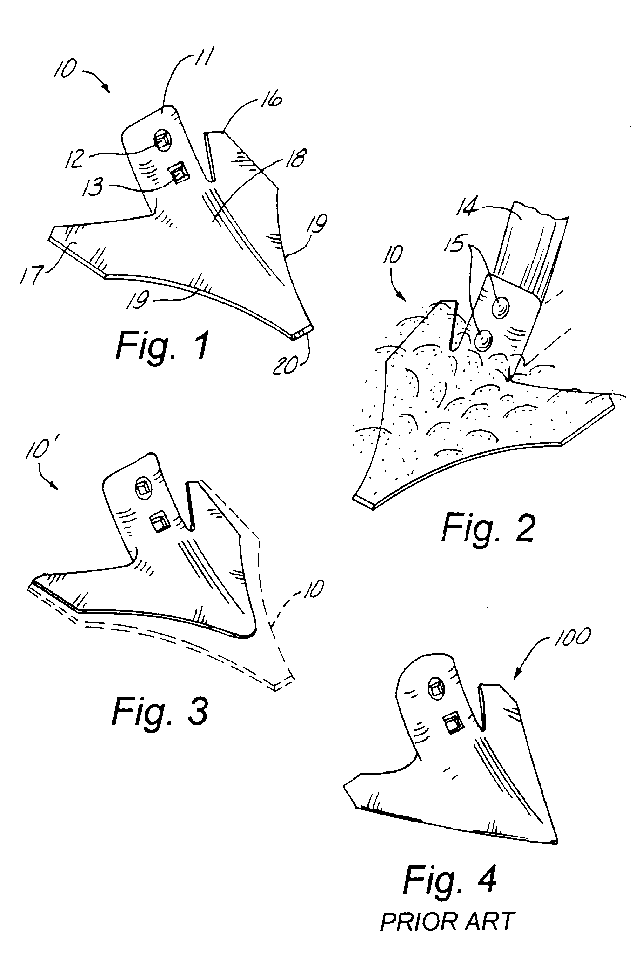

Referring now to the drawings wherein like reference numerals designate identical or corresponding parts throughout the several views, FIG. 1 shows a sweep (10) constructed in accordance with the present invention and being substantially identical to the sweep disclosed in U.S. Patent Application Ser. No. 09/378,951, now Patent No. , which is incorporated herein by reference. The sweep (10) has a shank portion (11) with holes (12) and (13) therein for allowing it to be attached to a shank (14) with bolts (15) as shown in FIG. 2. A left rear wing (16) and a right rear wing (17) are connected by an intermediate portion (18).

Concave edges (19) taper forwardly to a chisel point (20) which is at least ½ inch wide from one side to the other side and which is tapered in thickness from having practically no thickness at the extreme front thereof to a rear portion thereof which is substantially the same thickness as the plate from which the entire sweep is constructed. It has been determined empirically that the sweep (10) has approximately three times the life of a sweep (100) as shown in FIG. 4 of the prior art, and that the sweep (10) gradually wears from the original shape shown in FIG. 3 in dashed lines to the condition (10') shown in solid lines in FIG. 3. It can therefore be appreciated from this example that having a chisel point (20) and having more material in the sweep itself enhances the life and performance of the sweep (10).

Referring now to FIG. 5, a sweep (30) has a central upper rear shank portion (31) with holes (32) and (33) for receiving bolts, not shown, on a shank (14) similar to FIG. 2. The sweep (30) has a left rear wing portion (36) and a right rear wing portion (37) connected to an intermediate portion (38) and chisel point (20) substantially like the chisel point shown in FIG. 1. The edges (39) of the sweep (30) extend through a straight line (34) during the construction of the sweep whereby a segment from point A to B form a concave portion (39AB) and a convex portion (39BC) wherein the length of (39AB) and (39BC) is the same and the shape is essentially a mirror image. Similarly, the shape of edges (39DE) and (39EF) are substantially the same length and are essentially a mirror image of each other because they are cut from a single sheet of material as shown in FIG. 8. Consequently, the sweep (30) can be cut with very little wasted material, the wasted material primarily being the parts (35) between the wings (36) and (37) and the central upper rear shank portion (31).

It is also possible to practice this invention by reversing the relationship of the concave and convex edges. In such relationship (not shown in the drawings), the edges (39) of the sweep (30) would still extend through a straight line (34) during the construction of the sweep whereby the segment from point A to B form a convex (39AB) (instead of a concave portion) and a concave portion (39BC) (instead of a convex portion) wherein the length of (39AB) and (39BC) is the same and the shape is essentially a mirror image. Similarly, the shape of edges (39DE) and (39EF) would be substantially the same length and are essentially a mirror image of each other but edge (39DE) would be the convex portion (instead of the concave portion shown in Figs. 6-8) and edge (39EF) would be the concave portion (instead of the convex portion show in Figs. 6-8). In this alternate arrangement the sweeps would still be cut from a single sheet of material.

FIG. 7 shows a sweep (40) constructed substantially like the sweep (30) of FIG. 5 except that lines (44) are formed at a greater angle so that they diverge more quickly from the point to the rear of the sweep (40) to provide a wider sweep but one which still has edges (49) which have convex portions (49AB) and (49DE) and convex portions (49BC) and (49EF) which have the same essential relationships as the FIG. 5 sweep wherein the length of the convex edges are the same as the concave edges and are of substantial mirror images thereof. It being therefore understood that when making a sweep of this type using the FIG. 8 example, that the lines (34) or (44) could be substantially any angle greater or less than these two examples and still fall within the scope of the present invention. FIG. 7 also has an intermediate part (48) and a central upper rear shank (41) with holes (42) and (43) therein. It also has wings (46) and (47).

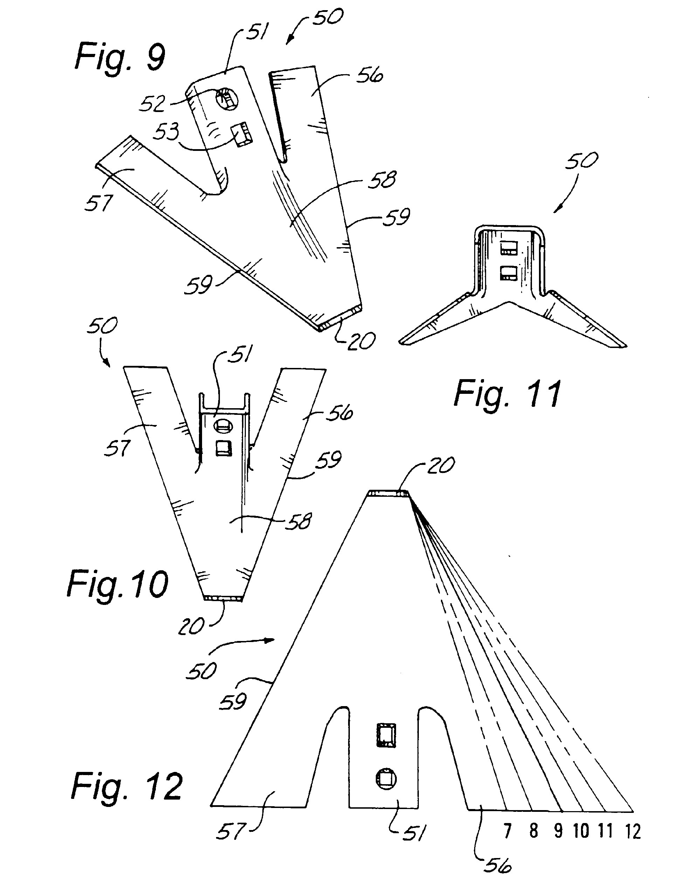

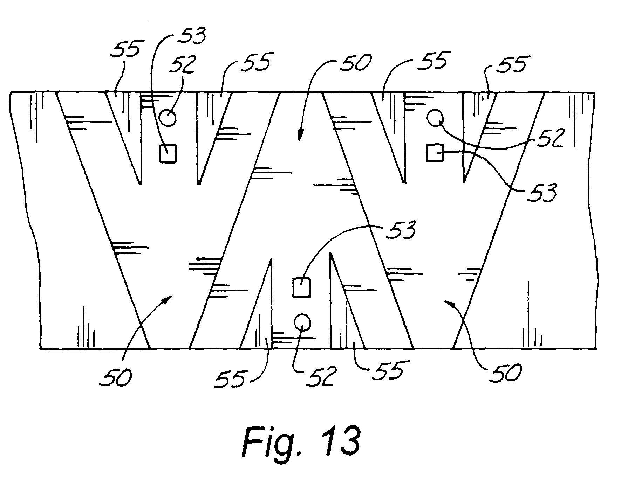

Referring now to FIGS. 9-13, another embodiment of the present invention (50) is shown in FIG. 9 having a trapezoidal shape when referring especially to FIG. 13. The sweep (50) shown in FIG. 9 still has a chisel point (20) like all of the other sweeps disclosed herein. The sweep (50) has a central upper rear shank portion (51) with holes (52) and (53) therein for attachment to an earth working shank (14) as shown in FIG. 2. The sweep (50) has a left rear wing (56) and a right rear wing (57) with an intermediate portion (58) leading to two straight sides (59) which extend forwardly to the chisel point (20).

Looking to FIG. 13, it is noted that the sweeps (50) can be cut from a rectangular sheet of material utilizing nearly all of the material within the sheet except for parts (55) and where the holes (52) and (53) are formed.

Referring to FIG. 12, it is noted that the sweep can be as wide or narrow as desired by the user as indicated by sizes (7), (8), (9), (10), (11) and (12) in FIG. 12. The sweep (50) in FIG. 12 has the right side in solid lines because the size (9) has been chosen, but if any of the other sizes shown in dashed lines are chosen, that chosen shape would merely be superimposed on the sheet of metal in FIG. 13 and a number of the chosen sized sweeps can then be cut from a single sheet of metal in order to conserve the metal, reduce waste and give the farmer as much metal as possible in order to enhance the performance and longevity of the sweep to be made therefrom.

Accordingly it will be appreciated that the preferred embodiments shown herein do indeed accomplish the aforementioned objects. Obviously many modifications and variations of the present invention are possible in light of the above teachings. It is therefore to be understood that, within the scope of the appended claims, the invention may be practiced otherwise than as specifically described.

## Claims

1. A ground engaging sweep comprising:
a shank for attachment to an implement for moving said shank in a forward direction over the ground;
a central portion extending downwardly and forwardly from said shank and terminating with an elongated straight point, said straight point being disposed substantially at a right angle with respect to said forward direction and being at least one-half an inch wide; and
a wing portion attached to each side of said central portion and each wing portion extending outwardly away from said central portion and rearwardly of said straight point.

2. The ground engaging sweep of claim 1 wherein said straight point is a chisel point tapered from its thinnest part at the extreme front thereof to its thickest part at the rear thereof.

3. The ground engaging sweep of claim 1 wherein said sweep is of substantially the same thickness of steel in said shank, central portion and said wing portions.

4. A method of making a ground engaging sweep from a sheet of metal which has two straight sides, a first end and a second end, said method comprising:
cutting the edges of said sweep so that the right side of one sweep is a mirror image of the left side of the next adjacent sweep and the right and left side of each sweep are closer together at the front thereof than at the back thereof whereby substantially as much of the metal as possible is used to make said sweep; and
forming a shank attachment section on one end of each one of said sweeps so that the sweep can be attached to a downwardly extending shank of an earth working implement.

5. The method of claim 4 wherein said edges of said sweeps are substantially straight.

6. The method of claim 4 wherein said edges of said sweeps are made to be somewhat S-shaped.

7. The method of claim 4 wherein said edges of said sweeps comprise making a concave portion and a convex portion, said concave portion being cut on the front portion of said sweep and the concave portion being cut on the rear portion of the sweeps during said cutting of the edges of the sweeps.

8. The method of claim 7 wherein said concave portions are made with a continuous radius of curvature.

9. The method of claim 7 wherein said convex portions are made with a continuous radius of curvature.

10. The method of claim 9 wherein each of said convex and concave portions are made to be of substantially the same length.

11. The method of claim 10 wherein said concave portion on each side of one of the sweeps are made to connect directly with the convex portion on a respective side of said one sweep.

12. The method of claim 11 wherein an extreme front portion of each of said sweeps is straight and disposed substantially perpendicular to the intended direction of forward direction of said sweeps in use.

13. The method of claim 12 including making said extreme front portion into a chisel point by tapering it so that it is thicker at the rear portion thereof than at the front thereof.

14. The method of claim 4 wherein said sweeps are cut from a sheet of metal which is flat.

15. The method of claim 14 wherein said sweeps are bent so that at any place along the longitudinal center thereof on at least the rear half of each sweep, the edge portions directly outwardly therefrom are lower than said place on the longitudinal center.

16. An earth working sweep comprising:
a front end;
a right side;
a left side;
a central upper rear portion for connecting said sweep to an implement;
a right rear wing portion;
a left rear wing portion;
an intermediate portion connecting the front end to said central upper rear portion and said left and right rear wing portions;
a right edge extending from said front end to the back of said right rear wing portion; and
a left edge extending from said front end to the back of said left rear wing portion, said left and right edges being concave on the front and convex on the back.

17. The earth working sweep of claim 16 wherein said left and right edges are somewhat S-shaped.

18. The earth working sweep of claim 16 wherein said concave and convex edges have substantially the same radius of curvature.

19. The earth working sweep of claim 18 wherein said concave portion is substantially the same length as said convex portion.

20. The earth working sweep of claim 16 wherein an extreme front portion of each of the front end of said sweep is straight and is disposed substantially perpendicular to the intended direction of forward direction of said sweep in use.

21. The method of claim 20 wherein said extreme front portion is a tapered chisel point whereby it is thicker at the rear portion thereof than at the front thereof.
